# EUROPEAN PATENT APPLICATION

(11) **EP 4 808 137 A1**
(43) Date of publication of application: **16.09.2026**
(21) Application number: 25186572.1
(22) Date of filing: 01.07.2025
(51) Int. Cl.: H04N 23/61, H04N 23/90, H04N 23/69, H04N 23/695, H04N 23/58, H04N 23/51

(54) **METHOD, SYSTEM, AND COMPUTER PROGRAM PRODUCT FOR CAPTURING A TARGET IMAGE**

(30) Priority: 10.03.2025 TW 114108679
(71) Applicant: Solomon Technology Corporation, Taipei City 11494 (TW)
(72) Inventor: CHEN,, Cheng-Lung, 11494 Taipei City (TW); NGUYEN,, Xuan Loc, 11494 Taipei City (TW)
(74) Representative: J A Kemp LLP

(57) **Abstract**

A method for capturing a target image is to be implemented by a system (100) that includes an image capturing device (1), and a processing module (2). The image capturing device (1) includes a large field-of-view, FOV, camera (11), a small FOV camera (12), and a beam steering device (13). The method includes, by the processing module (2): controlling the large FOV camera (11) to capture an initial image; identifying an object image of a target object in the initial image; obtaining position data, dimension data, and distance data based on the object image and the initial image; controlling the beam steering device (13) to rotate to a target angle based on the position data; controlling the small FOV camera (12) to adjust the small FOV camera (12) to a target focal length; and controlling the small FOV camera (12) to capture a target image related to the target object.

## Description

The disclosure relates to a method, a system, and a computer program product for capturing a target image.

A conventional system for acquiring target information includes a large field-of-view (FOV) camera and a pan-tilt-zoom (PTZ) camera. The large FOV camera is configured to capture a wide-angle image of a scene. The PTZ camera is configured to zoom in on a target object that is present in the scene based on a position of an object image of the target object in the wide-angle image, and to capture a target image that is related to the target object. The conventional system then performs image recognition on the target image to obtain information that is related to the target object. However, changing a viewing angle and a focal length of the PTZ camera involves making mechanical movements by the PTZ camera, which may result in limitations on movement speed and structural wear issues. As a result, the PTZ camera may not be able to quickly capture the target image of the target object in any area within the scene due to limitations on the movement speed, and the life span of the PTZ camera may be shortened due to the structural wear issues, thereby increasing the maintenance cost of the conventional system.

Therefore, an object of the disclosure is to provide a method, a system and a computer program product for capturing a target image that can alleviate at least one of the drawbacks of the prior art.

According to an aspect of the disclosure, there is provided a method for capturing a target image according to claim 1.

According to an aspect of the disclosure, there is provided a system for capturing a target image according to claim 7.

According to an aspect of the disclosure, there is provided a computer program product for capturing a target image according to claim 13.

Other features and advantages of the disclosure will become apparent in the following detailed description of the embodiment(s) with reference to the accompanying drawings. It is noted that various features may not be drawn to scale.
FIG. 1 is a flow chart illustrating a method for capturing a target image according to an embodiment of the disclosure.
FIG. 2 is a block diagram illustrating a system for capturing a target image according to an embodiment of the disclosure.
FIG. 3 is a perspective view of an image capturing device of the system according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

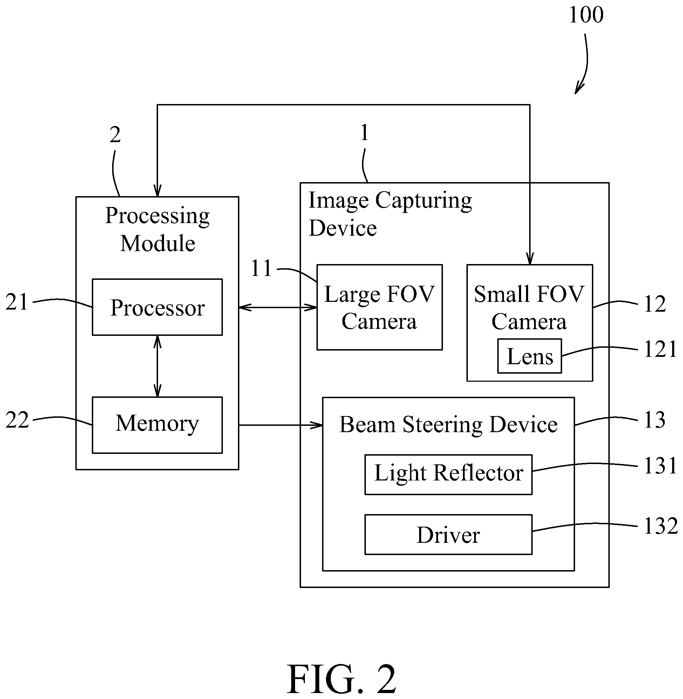

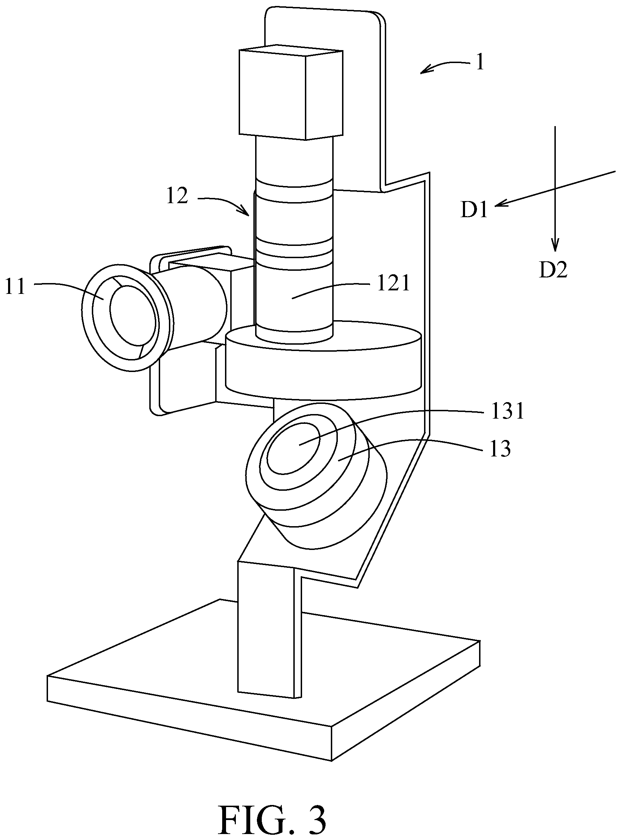

Referring to FIGS. 2 and 3, a system 100 for capturing a target image according to an embodiment of the present disclosure includes an image capturing device 1 and a processing module 2.

The image capturing device 1 includes a large field-of-view (FOV) camera 11, a small FOV camera 12 disposed at one side of the large FOV camera 11 and including a lens 121, and a beam steering device 13 disposed at the same side as the small FOV camera 12. In one embodiment, the large FOV camera 11 is embodied using a three-dimensional (3D) camera such as an L515 light detection and ranging (LiDAR) camera by Intel^{®} RealSense^{™} with an FOV of 70° x 43°, and an operating range of 0.25 m to 9 m, but the large FOV camera 11 is not limited to such. The small FOV camera 12 is embodied using a high-definition (HD) camera equipped with a 1-inch sensor that has a physical size of 12.8 mm x 9.6 mm, and has an FOV of 128 mm x 96 mm. For example, when the small FOV camera 12 has a working distance of 1000 mm, a focal length thereof is determined to be 100 mm. In one embodiment, the lens 121 is exemplified by a liquid zoom lens or a motorized zoom lens. However, the small FOV camera 12 is not limited to such. The beam steering device 13 includes a light reflector 131, and a driver 132 connected to the light reflector 131 for driving the light reflector 131 to rotate. In one embodiment, the beam steering device 13 is embodied using a servo-driven mirror, a micro-electromechanical system (MEMS) mirror, or a dual-axis voice coil mirror, but the beam steering device 13 is not limited to such.

The large FOV camera 11 is configured to face a first direction (D1). The lens 121 of the small FOV camera 12 is configured to face a second direction (D2) that is perpendicular to the first direction (D1). Specifically, the lens 121 of the small FOV camera 12 is configured to face the light reflector 131 of the beam steering device 13. The light reflector 131 is, for example, a plane mirror, and is configured to redirect light coming toward the large FOV camera 11 onto the lens 121 of the small FOV camera 12. In one embodiment, the light reflector 131 is tilted at an angle of about 45° with respect to the first direction in which the light is coming from, such that the light is reflected toward the small FOV camera 12.

In one embodiment, the processing module 2 is exemplified by a computer device that includes a processor 21 and a memory 22. The memory 22 stores hardware specification data of the large FOV camera 11 and the small FOV camera 12 (e.g., the focal length, a principal point, a resolution, etc.). The processor 21 may be exemplified by, for example, a central processing unit (CPU), a micro-processing unit (MPU), a graphics processing unit (GPU), a tensor processing unit (TPU), or a combination thereof, but the processor 21 is not limited to such. The memory 22 is exemplified by, for example, a hard disk drive, a random access memory (RAM), a read only memory (ROM), a programmable ROM (PROM), a flash memory, and a non-transitory computer-readable storage medium. The memory 22 stores a computer program product. The computer program product includes instructions that, when executed by a processor (e.g., the processor 21 of the computing device), cause the processor to perform a method for capturing a target image according to an embodiment of the disclosure.

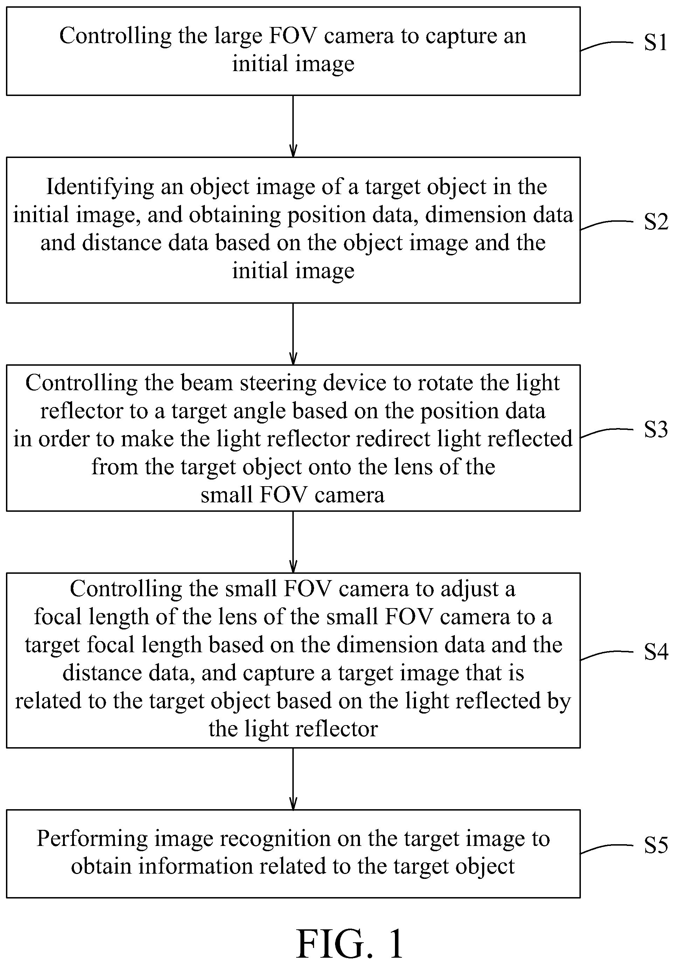

Referring to FIG. 1, an embodiment of the method for capturing a target image is provided. For example, the method is to be implemented by the system 100 of FIG. 2, and includes steps S1 to S5. In one example, a physical space in the first direction has a plurality of to-be-identified objects. In this example, the system 100 is used to identify any one of or every single one of the to-be-identified objects, or to identify a mark or a reading (e.g., a meter reading) on said any one of or said every single one of the to-be-identified objects present in the physical space in the first direction.

In step S1, the processor 21 of the processing module 2 controls the large FOV camera 11 that is facing the first direction (D1) to capture an initial image, and transmit the initial image to the processing module 2.

In step S2, the processor 21 of the processing module 2, in response to receipt of the initial image from the large FOV camera 11, identifies an object image of a target object in the initial image. Specifically, the processor 21 of the processing module 2 uses an artificial intelligence (AI)-based image recognition algorithm to first obtain a plurality of bounding boxes that correspond respectively to the to-be-identified objects in the initial image and to identify a plurality of object images defined respectively by the bounding boxes, where the target object is one of the to-be-identified objects and the object image of the target object is one the object images of the to-be-identified objects in the initial image. The AI-based image recognition algorithm may be exemplified by AI-based models such as the You Only Look Once (YOLO) series, the faster region-based convolutional neural network (Faster R-CNN), the single shot multibox detector (SSD), the RetinaNet, or the vision transformer (ViT). Alternatively, traditional image processing methods may be employed, such as the canny edge detection method or the template matching technique. However, the AI-based image recognition algorithm is not limited in this respect.

For each of the to-be-identified objects, based on a position and a size of the object image of the to-be-identified object within the initial image, and the hardware specification data of the large FOV camera 11, the processor 21 of the processing module 2 obtains position data related to a position of the to-be-identified object relative to the large FOV camera 11 in the physical space, dimension data related to a dimension of the to-be-identified object, and distance data related to a distance between the to-be-identified object and the large FOV camera 11 in the physical space.

In one embodiment, the large FOV camera 11 is exemplified as the 3D camera (e.g., a depth camera). In one embodiment, the initial image thus captured has depth information associated with the initial image. After the processor 21 has identified the object images respectively of the to-be-identified objects in the initial image, the processor 21 obtains plural sets of 3D point cloud data (i.e., the depth information) that correspond respectively to the object images from the initial image. The plural sets of 3D point cloud data thus obtained correspond respectively to positions respectively of the object images in the initial image. The processor 21 then calculates the position data, the dimension data and the distance data based on the plural sets of 3D point cloud data thus obtained.

In some embodiments, the large FOV camera 11 is embodied using a two-dimensional (2D) camera. In such embodiments, the memory 22 further stores the dimension data that includes, for example, an actual height (H) of each to-be-identified object, and the processor 21 may calculate the position data and the distance data using techniques such as the perspective projection technique, the monocular depth estimation technique, the size-based estimation technique, and the monocular cues technique, but the techniques used are not limited to such.

Specifically, when the processor 21 uses the perspective projection technique, the processor 21 calculates the distance data for an object using an equation: $Z = \left(f x H\right) / h ,$ where "Z" denotes the distance between the object (e.g., a car park sign of known height) and the large FOV camera 11, "f" denotes the focal length of the large FOV camera 11, and "h" denotes a pixel height of the object in the initial image;

When using the monocular depth estimation technique, the processor 21 uses deep learning models (e.g., the multiple depth estimation accuracy with single network (MiDaS) and the depth prediction transformer (DPT)) to estimate the depth information of each pixel of the object image in the initial image, and the processor 21 calculates the distance data related to the object based on the depth information thus estimated. These deep learning models are trained using large datasets with depth annotations and are able to estimate 3D depth information from a single 2D image.

When using the size-based estimation technique, the processor 21 compares an actual size (e.g., the actual height) of the object in the physical space with a size (e.g., the pixel height) of the object image of the object in the initial image to calculate the distance between the object and the large FOV camera 11 to obtain the distance data (e.g., in the field of autonomous vehicle, a standard dimension of cars and a standard dimension of road signs can be used to respectively estimate distances between a camera on the autonomous vehicle and the cars in a surrounding of the autonomous vehicle, and between the camera and the road signs in the surrounding of the autonomous vehicle).

When using the monocular cues technique, the processor 21 infers a relative depth of the object based on clues such as perspective lines, occlusion, light and shadow, and texture gradients in the physical space, where distant objects usually appear smaller and blurrier than nearby objects.

In some embodiments, the processor 21 controls the large FOV camera 11 to capture multiple initial images at different time frames when the large FOV camera 11 is in motion. In such embodiments, the processor 21 may use the optical flow and the simultaneous localization and mapping (SLAM) technique to estimate the depth information of the object based on the changes between the multiple initial images at the different time frames, and to use the depth information to calculate the position data and the distance data. It should be noted that, parallax and feature point matching techniques, such as the oriented FAST and rotated BRIEF (ORB) and the scale invariant feature transform (SIFT) can be used to reconstruct 3D structures from 2D image sequences, as commonly implemented in a SLAM system.

After the processing module 2 has identified the object images of the to-be-identified objects in the initial image and obtained the position data, the dimension data and the distance data for each of the to-be-identified objects, one of the to-be-identified objects is selected as the target object, and then the processor 21 obtains the position data, the dimension data, and the distance data related to the target object. The target object may be selected manually by a user of the system 100, or selected automatically by the processor 21 according to a predetermined algorithm.

In step S3, the processor 21 controls the beam steering device 13 to rotate the light reflector 131 to a target angle based on the position data in order to make the light reflector 131 redirect light reflected from the target object onto the lens 121 of the small FOV camera 12. Specifically, the processor 21 controls the driver 132 to rotate the light reflector 131 to the target angle.

In one embodiment where the beam steering device 13 is exemplified as the servo-driven mirror, the driver 132 is exemplified using, for example, a servo motor or an electromagnetic driver, but is not limited to such. Advantages of using the servo-driven mirror are that a reflection aperture of the servo-driven mirror is large, and the servo-driven mirror is able to handle relatively large light and long-distance imaging. Furthermore, the servo-driven mirror technology is mature, and movement speed of the servo-driven mirror is much faster than that of a traditional pan-tilt-zoom (PTZ) camera. In another embodiment where the beam steering device 13 is exemplified as the MEMS mirror, the driver 132 is configured to actuate the MEMS mirror by vibrating or tilting the MEMS mirror at high speed through electrical signals. Advantages of using the MEMS mirror are that a size of the MEMS mirror is relatively small and a response speed of the MEMS mirror is relatively high. Therefore, the MEMS mirror is suitable for lightweight and high-speed scanning requirements and is also suitable for applications with relatively close distances or relatively small fields of view. In yet another embodiment where the beam steering device 13 is exemplified as the dual-axis voice coil mirror, the driver 132 is exemplified as a current-controlled driver circuit configured to drive the light reflector 131 to adjust a projection position of an incident light in two directions, and is suitable for optical path adjustment requiring a relatively large range and a relatively smooth movement.

Specifically, the processor 21 calculates a rotation angle of the light reflector 131 based on the position data of the target object, and controls the beam steering device 13 to rotate the light reflector 131 at the rotation angle to the target angle. In order for the processor 21 to calculate the rotation angle of the light reflector 131, the system 100 of this disclosure first performs a camera calibration procedure. The camera calibration procedure includes steps C01 to C03. It should be noted that the camera calibration procedure may be pre-implemented prior to the method. In the camera calibration procedure, coordinate systems respectively of the large FOV camera 11 and the small FOV camera 12 are aligned within a common coordinate system.

In step C01, the processor 21 defines the coordinate systems of the large FOV camera 11, the small FOV camera 12 and the light reflector 131 as C_{W}, C_{S}, and C_{M}, respectively. In this embodiment, the coordinate system of the large FOV camera 11 (C_{W}) is used as the world coordinate system. Accordingly, parameters of the small FOV camera 12 need to be transformed into the world coordinate system for further computation. The coordinate system of the light reflector 131 (C_{M}) is defined based on a rotation axis of the light reflector 131 and uses two-axis rotation angles of the light reflector 131 (θx and θy) to determine the position of the light reflector 131.

In step C02, the processor 21 calibrates the coordinate system of the light reflector 131 (C_{M}) relative to the world coordinate system (C_{W}) by determining a center of rotation (O_{M}) and a normal vector (n_{W}) of the light reflector 131 with respect to the world coordinate system (C_{W}). The processor 21 calibrating the light reflector 131 includes using a plurality of 3D reference points (P_{W}) in the world coordinate system (C_{W}). For instance, a chessboard pattern is placed within an FOV of the large FOV camera 11, and corners within the chessboard pattern are respectively taken as the 3D reference points (P_{W}). A reflected image of the chessboard pattern is captured by the small FOV camera 12 through the light reflector 131. The processor 21 records a plurality of projection positions that are respectively projections of the 3D reference points (P_{W}) in the reflected image, and each of the projection positions is indicated by a coordinate set (u, v) in the coordinate system of the small FOV camera 12 (C_{S}). By having the 3D reference points (P_{W}) and the projection positions (u, v), the processor 21 uses the perspective-n-point (PnP) algorithm to estimate extrinsic parameters (pose) of the small FOV camera 12, where the extrinsic parameters of the small FOV camera 12 include a rotation matrix (R_{ws}) and a translation vector (T_{ws}) which respectively represent an orientation and a position of the small FOV camera 12 in the world coordinate system (C_{W}). Due to the presence of the light reflector 131, the small FOV camera 12 captures the reflected image as if the small FOV camera 12 were positioned behind the light reflector 131; that is to say, the reflected image is captured by a virtual small FOV camera, and the reflected image represents a virtual view of a scene that includes the chessboard pattern. To accurately estimate the pose (R_{ws}, T_{ws}) of the small FOV camera 12 relative to the world coordinate system (C_{W}), a virtual pose (R_{ws'}, T_{ws'}) of the virtual small FOV camera relative to the world coordinate system (C_{W}) has to be determined, which requires prior determination of the center of rotation (O_{M}) and the normal vector (n_{W}) of the light reflector 131.

To estimate the center of rotation (O_{M}) of the light reflector 131, the system 100 records the 3D reference points (P_{W}) viewed by the small FOV camera 12 at different angles (θx, θy) of the light reflector 131 as a plurality of 3D points (P_{M}), respectively. Since the center of rotation (O_{M}) of the light reflector 131 remains fixed, and only the normal vector (n_{W}) of the light reflector 131 changes with rotation of the light reflector 131, the center of rotation (O_{M}) of the light reflector 131 can be inferred from a relationship among the 3D reference points (P_{W}), the 3D points (P_{M}), and the two-axis rotation angles of the light reflector 131 (θx, θy).

For each of the 3D reference points (P_{W}) and a corresponding one of the 3D points (P_{M}), the normal vector (n_{W}) of the light reflector 131 is calculated using the law of reflection: $r = d - 2 \left(d⋅{n}_{W}\right) {n}_{W} ,$ where "r" denotes a reflected vector of a light beam reflected by the light reflector 131, and "d" denotes an incident vector of the light beam from the 3D reference point (P_{W}) to the light reflector 131. In this example, "d" is defined as O_{M} - P_{W}, and "r" is defined as P_{M} - O_{M}.

In step C03, once the center of rotation (O_{M}) and the normal vector (n_{W}) of the light reflector 131 are determined, the virtual pose (R_{ws'}, T_{ws'}) of the virtual small FOV camera is computed by setting the two-axis rotation angles of the light reflector 131 (θx, θy) to zero degrees, and applying the PnP algorithm. The pose (R_{ws}, T_{ws}) of the small FOV camera 12 is then calculated as: ${T}_{ws} = {O}_{M} + \left({T}_{ws ′}-{O}_{M}\right) - 2 \left(\left({T}_{ws ′}-{O}_{M}\right)⋅{n}_{W}\right) {n}_{W} ,$ and ${R}_{ws} = {R}_{ws ′} {R}_{F} ,$ where "R_{F}" is a reflection matrix of the light reflector 131 and is calculated as R_{F} = I - 2n_{W}n_{W}^{T}, and "I" is a 4 x 4 identity matrix.

After the camera calibration procedure, the processor 21 computes the two-axis rotation angles of the light reflector 131 (θx, θy) to redirect light reflected from one of the 3D reference points (P_{W}) toward the lens 121 of the small FOV camera 12. Specifically, the light reflected from the 3D reference point (P_{W}) is redirected to an optical center (O_{S}) of the small FOV camera 12. The processor 21 can calculate the two-axis rotation angles of the light reflector 131 (θx, θy) using the equation representing the law of reflection (hereinafter referred to as "the reflection equation"): $υ ′ = υ - 2 \left({n}_{W}⋅υ\right) {n}_{W} ,$ where υ = O_{M}- P_{W} (the incident vector of light from the 3D reference point (P_{W}) to the light reflector 131), and υ' = O_{S} - O_{M} (i.e., the reflected vector of light reflected by the light reflector 131 to the optical center (O_{S}) of the small FOV camera 12). Specifically, since the center of rotation (O_{M}) of the light reflector 131 and the optical center (O_{S}) of the small FOV camera 12 are fixed, which indicates that the reflected vector υ' is known, and an angle of the incident vector is equal to an angle of the reflected vector, the rotation angle of the light reflector 131 can be calculated using the reflection equation once the position data of the target object is known.

The following derivation solves for the normal vector (n_{W}) of the light reflector 131 and ensures that n_{W} is a unit vector (i.e., ∥n_{W}∥ = 1). The reflection equation is rearranged to $υ - υ ′ = 2 \left({n}_{W}⋅υ\right) {n}_{W} .$

By defining k = υ - υ', the reflection equation becomes $k = 2 \left({n}_{W}⋅υ\right) {n}_{W} .$

Assuming n_{W} = Ak, where λ is a coefficient to be determined, the equation becomes $k = 2 \left(λk⋅υ\right) \left(λk\right) .$

Taking the inner product of both sides, the equation becomes $k ⋅ k = 2 λk ⋅ υ ⋅ \left(λk\right) , which equals to {\left‖k\right‖}^{2} = 2 {λ}^{2} \left(k⋅υ\right) \left‖k\right‖ .$

Solving for λ gives, λ = (1/2)(1/(k · υ)).

By directly normalizing n_{W}, n_{W} = k/(∥k∥), where k = υ - υ'.

Therefore, n_{W} = (υ - υ') / (∥υ - υ'∥). Here, the normal vector (n_{W}) of the light reflector 131 not only satisfies the equation of the reflection equation but also ensures that ∥n_{W}∥ = 1.

In this example, feature points of the target object are respectively taken as the 3D reference points (P_{W}). By virtue of determining the center of rotation (O_{M}) and the normal vector (n_{W}) of the light reflector 131, and ensuring that a rotational behavior of the light reflector 131 can be accurately described, the rotation angle of the light reflector 131 can be calculated. The processor 21 then controls the beam steering device 13 to rotate the light reflector 131 at the rotation angle to the target angle in order to make the light reflector 131 redirect light reflected from the target object onto the lens 121 of the small FOV camera 12.

In step S4, the processor 21 controls the small FOV camera 12 to adjust a focal length of the lens 121 of the small FOV camera 12 to a target focal length based on the dimension data and the distance data. Specifically, the processor 21 calculates the target focal length based on the dimension data, the distance data, and the hardware specification data of the small FOV camera 12 stored in the memory 22, and controls the small FOV camera 12 to adjust the focal length of the lens 121 of the small FOV camera 12 to the target focal length thus calculated. For example, during the camera calibration procedure described above, the processor 21 may establish a linear relationship diagram indicating linear relationship between the target focal length of the lens 121 of the small FOV camera 12 and the distance between the target object and the large FOV camera 11 indicated by the distance data. Then, by way of table lookup and interpolation, the target focal length that corresponds to the distance indicated by the distance data can be determined. After the processor 21 has controlled the beam steering device 13 to rotate the light reflector 131 to the target angle and has controlled the small FOV camera 12 to adjust the focal length of the lens 121 of the small FOV camera 12 to the target focal length, the processor 21 controls the small FOV camera 12 to capture a target image that is related to the target object based on the light reflected by the light reflector 131. In this example, the target image shows an enlarged view of the target object.

Specifically, after the processor 21 has controlled the small FOV camera 12 to adjust the focal length of the lens 121 of the small FOV camera 12 to the target focal length, the processor 21 further controls the lens 121 of the small FOV camera 12 to perform autofocus in order to focus on a virtual image of the target object reflected in the light reflector 131, and then controls the small FOV camera 12 to take a picture of the virtual image of the target object as the target image. The small FOV camera 12 then transmits the target image to the processor 21.

By virtue of the large FOV camera 11 cooperating with the small FOV camera 12 that is an HD camera, and using the beam steering device 13 that is able to rotate the light reflector 131 in a relatively fast manner, as well as the small FOV camera 12 utilizing the liquid zoom lens or the motorized zoom lens that is able to perform zooming in a relatively fast and accurate manner, the system 100 of this disclosure is able to capture the target image of the target object in the physical space with HD quality in a relatively fast manner.

In step S5, in response to receipt of the target image, the processor 21 performs image recognition on the target image to obtain information related to the target object. In a case where multiple ones of the to-be-identified objects are selected as target objects, the processor 21 may obtain, for each of the target objects, the position data, the dimension data and the distance data related to the target object when the processor 21 is executing the step S2. The processor 21 may then repeat steps S3 to S5 to sequentially capture the target images related respectively to the target objects thus selected. Then, the processor 21 performs the image recognition on the target images to obtain information related to the target objects.

In one embodiment, the processor 21 uses, for example, but not limited to, automated optical inspection (AOI)-related algorithms or Zero-Shot AI models (e.g., ChatGPT, CLIP, DINO, etc.) to perform the image recognition on the target image. The target image captured by the small FOV camera 12 is an HD image of the target object, and is captured through the light reflector 131, after the target image has been magnified and focused. It should be noted that, using HD images to train AI models reduces a number of training images required for training the AI models, thereby improving recognition accuracy, and also enhancing recognition performance of the AOI-related algorithms. As for the Zero-Shot AI models, using HD images also improves the performance of the Zero-Shot AI models.

Therefore, training AI models using HD images can significantly reduce the number of training images required and improve recognition precision. Efficient image processing and AI model generation can be applied to various scenarios, such as menu order recognition, defect detection, robotic navigation, and autonomous mobile robots (AMRs).

The following are example implementations where the system 100 of this disclosure is applied to different scenarios.

In a menu order verification system, the large FOV camera 11 captures an initial image of the menu order form that has a plurality of food items, and locates contours of each food item in the initial image. Then, the processor 21 controls the beam steering device 13 to rotate the light reflector 131 to the target angle, and controls the small FOV camera 12 to adjust the focal length of the lens 121 of the small FOV camera 12 to the target focal length to zoom in on a region that corresponds to the contour of one of the food items. The processor 21 then controls the lens 121 of the small FOV camera 12 to perform autofocus on a virtual image of said one of the food items, and subsequently controls the small FOV camera 12 to take a picture of the virtual image as the target image (i.e., an **HD** image). The processor 21 then performs image recognition on the target image to determine whether an order has been placed on the food item that corresponds to the target image. Since the menu order form is usually placed on a table and remains stationary, after the lens 121 of the small FOV camera 12 has performed autofocus once, the processor 21 may only need to control the light reflector 131 to rotate at different rotation angles that correspond respectively to the rest of the food items on the menu order list in order for the small FOV camera 12 to capture images of all the food items on the menu order list. For example, the small FOV camera 12 may capture more than 15 target images per second from different positions of the menu order list. The processor 21 then compares a recognition result listing all of the food items that have been ordered with the menu order form. After the food items that have been ordered are verified, preparation and delivery of the food may proceed. In this example, rapid acquisition of HD images combined with efficient training of AI models using a small number of images may reduce training costs of the AI models, and may improve an accuracy of the menu order verification system.

In a manufacturing line application, for example, in vehicle surface defect detection, the large FOV camera 11 captures an initial image that is a 3D image of a vehicle. The processor 21 determines a posture and a contour of the vehicle. The processor 21 then projects multiple designated inspection regions onto the vehicle's posture, thereby generating an inspection path that includes the designated inspection regions. For example, the inspection path may be planned in advance using a 3D model file of the designated inspection regions. The processor 21 converts the 3D model file into point cloud data and matches the point cloud data of the 3D model file with the point cloud data obtained by the large FOV camera 11. By doing so, the inspection path may be projected onto a real body of the vehicle. The processor 21 then controls the light reflector 131 and the small FOV camera 12 to zoom in and focus on each of the designated inspection regions along the inspection path. In this example, high-resolution local inspection is realized, and relatively small-sized defects across large areas may be detected.

In robotics and AMRs, during navigation, the processor 21 controls the large FOV camera 11 to capture multiple initial images of a surrounding for path planning and for environmental monitoring. The processor 21 then controls the light reflector 131 and the small FOV camera 12 to perform detailed observations on multiple regions of interest. For instance, AMRs using the system 100 of this disclosure are able to perform obstacle recognition, analog and digital gauge reading, object (e.g., signal lights, machinery, and components) recognition, and acquire information from the surrounding to generate appropriate responses. Therefore, in this example, the system 100 of this disclosure combines fast image processing and high-precision recognition to enhance the autonomy and reliability of robotic systems in complex environments.

In the field of logistics such as in palletizing and depalletizing, the processor 21 controls the large FOV camera 11 to capture an initial image of a pallet to obtain 3D point cloud data of the pallet, and to calculate and locate the highest surface area of stacked boxes on the pallet. Based on a region where the highest surface is located, the processor 21 obtains a region image showing the stacked boxes from the initial image. The processor 21 then uses the Zero-Shot AI model to perform initial contour detection to identify potential candidate boxes. The processor 21 then controls the light reflector 131 and the small FOV camera 12 to zoom in and focus on the contour of a selected one of the boxes. The processor 21 controls the small FOV camera 12 to perform autofocus and to capture an HD image of a surface of the selected one of the boxes. Then, the processor 21 uses the Zero-Shot AI model again to perform image recognition on the HD image to verify whether the selected one of the boxes can be reliably gripped. In some examples, the YOLO algorithm or other AI models may also be used for image recognition. Using the 3D point cloud data that corresponds to the selected one of the boxes, the processor 21 calculates precise 3D coordinates of the selected one of the boxes, and controls a robotic arm to perform a grabbing operation, thereby executing a depalletizing process. In this example, the need for pre-collection of data and model training is eliminated, thereby reducing deployment cost and time. Furthermore, by virtue of the small FOV camera 12 being an HD camera capable of autofocus, the system 100 of this disclosure ensures clarity of the target image captured, thereby improving object recognition and grabbing accuracy. In addition, the system 100 is able to dynamically adapt to boxes of different sizes and shapes, thereby improving a flexibility of the system 100.

In summary, by virtue of the large FOV camera 11 cooperating with the small FOV camera 12 and the beam steering device 13, the system 100 of this disclosure is able to perform image recognition and image capturing in scenes with multiple objects, complex geometric shapes, and significant distance differences (e.g., in scenes used for depalletizing operations in logistics and warehouse inventory), thereby overcoming limitations of conventional system that use a single camera or pan-tilt-zoom (PTZ) camera with respect to adaptability. The system 100 of this disclosure is also capable of performing autofocus to provide accurate image data. Furthermore, by using the liquid zoom lens as the lens 121 of the small FOV camera 12 and combining with the beam steering device 13, the system 100 of this disclosure is able to achieve fast FOV switching, avoid mechanical wear problems, extend equipment life, and reduce maintenance costs.

The system 100 of this disclosure, when combined with the Zero-Shot AI model for preliminary object identification and detailed re-evaluation (as described in the example above where the system 100 is used in the field of logistics), eliminates reliance on relatively large amounts of training data, thereby reducing the deployment threshold, time and cost of the system 100. By virtue of the large FOV camera 11 having a large FOV and the small FOV camera 12 able to capture HD images, the system 100 of this disclosure achieves relatively high-precision object recognition in real-time environments, such as accurately identifying a contour or a barcode of a box that is to be unpacked.

In depalletizing operations in logistics applications, conventional systems rely on box size prediction and large-scale photo annotation. The system 100 of this disclosure is able to realize a dynamic and real-time intelligent depalletizing process by performing object recognition regardless of the size, shape or placement of a box to be grabbed, thereby enabling automatic maneuvering of a robotic arm. In some embodiments, the system 100 of this disclosure is equipped with barcode decoding capabilities. In such embodiments, when used in a warehouse inventory system, the system 100 is able to quickly locate and decode multiple barcodes, especially when in scenarios where the barcodes are close to each other or where the environment is complex. In addition, the system 100 of this disclosure can greatly improve inventory efficiency and avoid object recognition errors caused by environmental reflections or barcode deformation.

Moreover, the system 100 of this disclosure supports modular design. The large FOV camera 11 and the small FOV camera 12 can be embodied with other cameras according to application requirements, such as using cameras with lenses of different focal lengths to adapt to more diverse application scenarios. Furthermore, the system 100 of this disclosure can be seamlessly integrated with existing automation equipment, such as automated guided vehicle (AGV), AMR, or production line robotic arms to enhance the overall efficiency of industrial automation.

In some embodiments, to accommodate different lighting environments, the large FOV camera 11 and the small FOV camera 12 may be embodied using other cameras, where the cameras, the lenses of the cameras, and the apertures of the cameras are selected according to application requirements. The image capturing device 1 may further include auxiliary light source modules and be equipped with multi-layer optical correction technology. By virtue of this arrangement, the system 100 of this disclosure is able to maintain stable image quality and accuracy under strong light, low light, or other complex lighting conditions, and is suitable for diverse indoor and outdoor applications.

By combining advanced optical and AI technologies, the system 100 of this disclosure is able to reduce hardware requirements and computing costs, while achieving the same or higher object recognition accuracy without relying on relatively expensive multi-target cameras or relatively large amounts of training data.

In conclusion, the processor 21 controls the large FOV camera 11 to capture the initial image. In response to receipt of the initial image from the large FOV camera 11, the processing module 2 identifies the object image of the target object in the initial image. The processing module 2 then obtains position data related to the position of the target object relative to the large FOV camera 11 in the physical space, dimension data related to the dimension of the target object, and distance data related to the distance between the target object and the large FOV camera 11 based on the object image and the initial image. Subsequently, the processing module 2 controls the beam steering device 13 to rotate the light reflector 131 to the target angle based on the position data, in order to make the light reflector 131 redirect light reflected from the target object onto the lens 121 of the small FOV camera 12. The processing module 2 then controls the small FOV camera 12 to adjust the focal length of the lens 121 of the small FOV camera 12 to the target focal length based on the dimension data and the distance data. The processing module 2 then controls the small FOV camera 12 to capture the target image that is related to the target object. By virtue of the aforementioned arrangements, the system 100 of this disclosure is able to capture the target image of the target object located anywhere within the physical space without structural wear issues, thereby extending equipment service life and reducing maintenance costs.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for capturing a target image to be implemented by a system (100) that includes an image capturing device (1), and a processing module (2) electrically connected to the image capturing device (1), the image capturing device (1) including a large field-of-view, FOV, camera (11), a small FOV camera (12) disposed at one side of the large FOV camera (11) and including a lens (121), and a beam steering device (13) disposed at the same side as the small FOV camera (12) and including a light reflector (131), said method **characterized by**:
the processing module (2) controlling the large FOV camera (11) to capture an initial image;
in response to receipt of the initial image from the large FOV camera (11), the processing module (2) identifying an object image of a target object in the initial image;
the processing module (2) obtaining position data related to a position of the target object relative to the large FOV camera (11) in a physical space, dimension data related to a dimension of the target object, and distance data related to a distance between the target object and the large FOV camera (11) based on the object image and the initial image;
the processing module (2) controlling the beam steering device (13) to rotate the light reflector (131) to a target angle based on the position data in order to make the light reflector (131) redirect light reflected from the target object onto the lens (121) of the small FOV camera (12);
the processing module (2) controlling the small FOV camera (12) to adjust a focal length of the lens (121) of the small FOV camera (12) to a target focal length based on the dimension data and the distance data; and
after controlling the beam steering device (13) to rotate the light reflector (131) to the target angle and controlling the small FOV camera (12) to adjust the focal length of the lens (121) of the small FOV camera (12) to the target focal length, the processing module (2) controlling the small FOV camera (12) to capture a target image that is related to the target object based on the light reflected by the light reflector (131).

2. The method as claimed in Claim 1, wherein identifying the object image of the target object includes the processing module (2) using an artificial intelligence-based image recognition algorithm to identify a plurality of object images in the initial image, where the object image of the target object is one of the plurality of object images in the initial image,
wherein controlling the beam steering device (13) to rotate the light reflector (131) to the target angle includes the processing module (2) calculating a rotation angle of the light reflector (131) based on the position data, and controlling the beam steering device (13) to rotate the light reflector (131) at the rotation angle to the target angle.

3. The method as claimed in Claim 1 or 2, wherein controlling the small FOV camera (12) to adjust the focal length of the lens (121) of the small FOV camera (12) to the target focal length includes the processing module (2) calculating the target focal length based on the dimension data and the distance data, and controlling the small FOV camera (12) to adjust the focal length of the lens (121) of the small FOV camera (12) to the target focal length thus calculated,
wherein the target image shows an enlarged view of the target object.

4. The method as claimed in any one of Claims 1 to 3, the lens (121) of the small FOV camera (12) being one of a liquid zoom lens and a motorized zoom lens,
wherein controlling the small FOV camera (12) to capture the target image includes the processing module (2) controlling the lens (121) of the small FOV camera (12) to perform autofocus in order to focus on a virtual image of the target object reflected in the light reflector (131), and then controlling the small FOV camera (12) to take a picture of the virtual image of the target object as the target image.

5. The method as claimed in any one of Claims 1 to 4, further comprising:
the small FOV camera (12) transmitting the target image to the processing module (2); and
the processing module (2), in response to receipt of the target image, performing image recognition on the target image to obtain information related to the target object.

6. The method as claimed in any one of Claims 1 to 5, the beam steering device (13) being one of a servo-driven mirror, a micro-electromechanical systems mirror and a dual-axis voice coil mirror, and further including a driver (132) connected to the light reflector (131) for driving the light reflector (131) to rotate,
wherein the processing module (2) controlling the beam steering device (13) to rotate the light reflector (131) to the target angle is by controlling the driver (132) to rotate the light reflector (131) to the target angle.

7. A system (100) for capturing a target image, **characterized by**:
an image capturing device (1) including a large field-of-view, FOV, camera (11), a small FOV camera (12) disposed at one side of said large FOV camera (11) and including a lens (121), and a beam steering device (13) disposed at the same side as said small FOV camera (12) and including a light reflector (131); and
a processing module (2) electrically connected to said image capturing device (1), and configured to perform the method as claimed in Claim 1.

8. The system (100) as claimed in Claim 7, wherein said processing module (2) is configured to use an artificial intelligence-based image recognition algorithm to detect a plurality of object images in the initial image, and to identify the object image of the target object from among the plurality of object images in the initial image,
wherein said processing module (2) is further configured to calculate a rotation angle of said light reflector (131) based on the position data, and said processing module (2) is configured to control said beam steering device (13) to rotate said light reflector (131) at the rotation angle to the target angle.

9. The system (100) as claimed in Claim 7 or 8, wherein said processing module (2) is further configured to calculate the target focal length based on the dimension data and the distance data, and said processing module (2) is configured to control said small FOV camera (12) to adjust the focal length of said lens (121) of said small FOV camera (12) to the target focal length thus calculated,
wherein the target image shows an enlarged view of the target object.

10. The system (100) as claimed in any one of Claims 7 to 9, wherein said lens (121) of said small FOV camera (12) is one of a liquid zoom lens and a motorized zoom lens, and said processing module (2) is configured to control said lens (121) of said small FOV camera (12) to perform autofocus in order to focus on a virtual image of the target object reflected in said light reflector (131), and then control said small FOV camera (12) to take a picture of the virtual image of the target object as the target image.

11. The system (100) as claimed in any one of Claims 7 to 10, said processing module (2) is further configured to, in response to receipt of the target image from said small FOV camera (12), perform image recognition on the target image to obtain information related to the target object.

12. The system (100) as claimed in any one of Claims 7 to 11, wherein said beam steering device (13) is one of a servo-driven mirror, a micro-electromechanical systems mirror and a dual-axis voice coil mirror, and further includes a driver (132) connected to said light reflector (131) for driving said light reflector (131) to rotate,
wherein said processing module (2) is configured to control said beam steering device (13) to rotate said light reflector (131) to the target angle by controlling said driver (132) to rotate said light reflector (131) to the target angle.

13. A computer program product stored in a non-transitory computer-readable storage medium, wherein the computer program product includes instructions that, when executed by a processor, cause the processor to implement the method of any one of Claims 1 to 6.
